# EUROPÄISCHE PATENTANMELDUNG

(11) **EP 2 664 859 A2**
(43) Veröffentlichungstag der Anmeldung: **20.11.2013**
(21) Anmeldenummer: 13001761.9
(22) Anmeldetag: 05.04.2013
(51) Int. Cl.: F24D 17/00

(54) **Wärmerückgewinnungsvorrichtung sowie deren Verwendung**

(30) Priorität: 16.05.2012 DE 102012104278
(71) Anmelder: Brunner, Willi, 8542 Wiesendangen (CH)
(72) Erfinder: Brunner, Willi, 8542 Wiesendangen (CH)
(74) Vertreter: Albrecht, Ralf

(57) **Zusammenfassung**

Die vorliegende Erfindung betrifft eine Wärmerückgewinnungsvorrichtung (1) zur Wärmerückgewinnung aus Schmutzwasser, insbesondere aus Grau- und Schwarzwasser, mit einem Sammeltank (2), der einen Schmutzwassereinlass (13) hat, und mit einem Wärmetauschertank (31), in dem ein Wärmetauscher (33) als Teil einer Wärmerückgewinnungseinrichtung (36) angeordnet ist und der mit dem Sammeltank (2) über eine Zuführleitung (29) derart verbunden ist, dass das Schmutzwasser vom Sammeltank (2) in den Wärmetauschertank (31) einführbar ist, wobei das einlassseitige Ende (30) der Zuführleitung (29) im Bereich eines Schwimmers (26) angeordnet ist, der in dem Sammeltank (2) mit dem einlassseitigen Ende (30) der Zuführleitung (29) auf- und abbewegbar ist. Des Weiteren betrifft die Erfindung die Verwendung der Wärmerückgewinnungsvorrichtung (1).

## Beschreibung

Die Erfindung betrifft eine Wärmerückgewinnungsvorrichtung zur Wärmerückgewinnung aus Schmutzwasser, insbesondere aus Grau- und Schwarzwasser, mit einem Sammeltank, der einen Schmutzwassereinlass hat, und mit einem Wärmetauschertank, in dem ein Wärmetauscher als Teil einer Wärmerückgewinnungseinrichtung angeordnet ist und der mit dem Sammeltank über eine Zuführleitung derart verbunden ist, dass das Schmutzwasser vom Sammeltank in den Wärmeaustauschertank einführbar ist. Ferner betrifft die Erfindung die besondere Verwendung der Wärmerückgewinnungsvorrichtung.

Im Stand der Technik ist es bekannt, die im Schmutzwasser enthaltene Wärme rückzugewinnen. Als Schmutzwasser kommt dabei auch Grauwasser (zur Definition: DIN EN 12056-1) und Schwarzwasser (zur Definition: ISO 6107-7: 1997) in Frage, also häusliches Abwasser, das wegen der Verwendung von Warmwasser im häuslichen Bereich einen hohen Wärmeinhalt hat und sich deshalb besonders für die Wärmerückgewinnung eignet. Es sind Wärmerückgewinnungsvorrichtung bekannt, die einen Sammeltank aufweisen, in dem ein Wärmetauscher als Teil einer Wärmerückgewinnungseinrichtung angeordnet ist. Über eine Abwasserleitung und einen Schmutzwassereinlass wird das Schmutzwasser dem Sammeltank zugeführt. Als Wärmerückgewinnungseinrichtung dienen Wärmepumpen, die dem Schmutzwasser die Wärme entziehen, welche dann dem Betrieb von häuslichen Warmwassereinrichtungen oder Heizungen zugeführt werden kann. Beispiele hierfür sind der EP 0 058 636 B1, CA 1 040 945 A, DE 26 25 157 A1 und der DE 29 19 004 A1 zu entnehmen. Dabei kann dem Sammeltank auch eine Speicherkammer zugeordnet sein, die mit dem Sammeltank in Verbindung steht und beheizt werden kann (DE 28 45 677 A1).

Eine gattungsgemäße Wärmerückgewinnungsvorrichtung ist in der WO 2007/126261 A1 offenbart. Bei dieser Wärmerückgewinnungsvorrichtung schließt sich an einen Sammeltank ein Wärmetauschertank an, in dem ein Wärmetauscher als Teil einer Wärmerückgewinnungseinrichtung angeordnet ist und der mit dem Sammeltank über eine Zuführleitung derart verbunden ist, dass das Schmutzwasser vom Sammeltank in den Wärmetauschertank einführbar ist. Für den Abfluss des Schmutzwassers aus dem Wärmetauschertank ist ein Auslass vorgesehen, der mit einem Auslassventil versehen ist.

Nachteilig bei dieser Wärmerückgewinnungsvorrichtung ist, dass Vorkehrungen getroffen werden müssen, damit der Schmutzwasserspiegel im Sammeltank stets so gefüllt ist, dass die Versorgung des Wärmetauschertanks gesichert ist. Damit es nicht zu Versorgungslücken kommt, darf der Auslass des Sammeltanks nicht zu hoch angeordnet werden. Dies hat zur Folge, dass dem Wärmetauschertank schon abgekühltes Schmutzwasser zugeführt wird, die Ausnutzung des Wärmeinhalts des zufließenden Schmutzwassers also nicht optimal ist.

Der Erfindung liegt die Aufgabe zugrunde, eine Wärmerückgewinnungsvorrichtung der eingangs genannten Art so zu gestalten, dass auch bei unterschiedlichen Schmutzwasserspiegeln im Sammeltank eine optimale Wärmerückgewinnung gewährleistet ist.

Diese Aufgabe wird erfindungsgemäß dadurch gelöst, dass das einlassseitige Ende der Zuführleitung im Bereich eines Schwimmers angeordnet ist, der in dem Sammeltank mit dem einlassseitigen Ende der Zuführleitung auf- und abbewegbar ist. Da der Schwimmer sich unabhängig vom Niveau des Schmutzwasserspiegels stets in dessen Bereich befindet, wird nur dasjenige Schmutzwasser dem Wärmetauschertank zugeführt, das den höchsten Wärmeinhalt hat. Aufgrund der sich natürlicherweise ergebenden Temperaturschichtung befindet sich das wärmste Schmutzwasser im Bereich des Schmutzwasserspiegels, insbesondere wenn die Schmutzwasserzufuhr in den Sammeltank von oben erfolgt. Da der Schwimmer und damit das einlassseitige Ende der Zuführleitung dem schwankenden Schmutzwasserspiegel folgt, bedarf es keiner Vorkehrungen zum Konstanthalten eines bestimmten Mindestniveaus des Schmutzwasserspiegels.

Es versteht sich, dass die schwimmerseitige Einlassöffnung der Zuführleitung so angeordnet wird, dass sie sich unterhalb des Schmutzwasserspiegels befindet, wenn der Schwimmer auf dem Schmutzwasserspiegel schwimmt. Dabei sollte der Abstand zum Schmutzwasserspiegel relativ gering sein, also vorzugsweise nicht mehr als 50 cm, besser noch nicht mehr als 20 cm, betragen.

In Ausbildung der Erfindung ist vorgesehen, dass der Schwimmer vorzugsweise an einem Auslegerarm geführt ist. Damit die Zuführleitung dem Schwimmer leicht folgen kann, sollte sie als biegsamer Schlauch ausgebildet sein.

In einem weiteren Merkmal der Erfindung ist vorgesehen, dass der Wärmetauscher als Doppelrohrwärmetauscher mit zumindest einem Innenrohr und einem dieses umgebenden Mantelrohr ausgebildet ist und dass eine Zuführpumpe vorgesehen ist, über die das in dem Wärmetauschertank befindliche Schmutzwasser in das Innenrohr einpumpbar ist. Dies ermöglicht es, das Innenrohr glatt auszubilden, so dass die Verstopfungsgefahr im Wärmetauscher gering ist. Gleichwohl wird ein intensiver Wärmeaustausch zu dem Wärmeträgermedium der Wärmerückgewinnungseinrichtung gewährleistet. Hinzukommt, dass das Mantelrohr bzw. die Mantelrohre von dem im Wärmetauschertank befindlichen Schmutzwasser umspült ist bzw. sind und auch hierdurch ein Wärmeübergang vom Schmutzwasser zu dem Wärmeträgermedium erfolgt, d.h. der Wärmeentzug aus dem Schmutzwasser geschieht mit optimalem Wirkungsgrad.

In weiterer Ausgestaltung der Erfindung ist vorgesehen, dass der Wärmetauschertank und der Sammeltank über eine Rückführleitung verbunden sind, so dass das Schmutzwasser wieder dem Sammeltank zurückgeführt wird. Dabei sollte die Rückführleitung vorzugsweise mit einem Auslass in der unteren Hälfte des Wärmetauschertanks und mit einem Einlass in der unteren Hälfte des Sammeltanks verbunden sein, damit die natürliche Temperaturschichtung erhalten bleibt. Folglich wird nur dasjenige Schmutzwasser aus dem Wärmetauschertank abgezogen, das aufgrund des Wärmeentzugs kalt ist, und dieses kalte Schmutzwasser wird auch dort in den Wärmetauschertank zurückgeführt, wo sich ebenfalls aufgrund der natürlichen Temperaturschichtung das kälteste Schmutzwasser befindet. Besonders zweckmäßig ist es, wenn der Wärmetauschertank hermetisch luftdicht abgeschlossen ist.

Nach einem weiteren Merkmal der Erfindung ist vorgesehen, dass der Sammeltank mit einem Auslass versehen ist, der ein schließ- und öffenbares Auslassventil aufweist, über den der Sammeltank zumindest teilweise entleerbar ist. Das Auslassventil lässt es zu, dass das Schmutzwasser periodisch und dann in erheblichen Mengen abgelassen wird und hierdurch ein Spüleffekt entsteht, der für eine gründliche Reinigung des sich anschließenden kommunalen Kanalsystems sorgt. Dies ist mit Blick darauf vorteilhaft, dass die Abwassermengen aus dem häuslichen Bereich eher rückläufig sind, beispielsweise aufgrund verringerter Spülmengen in Toiletten oder Sparventilen bei Armaturen. Mit Hilfe der Erfindung können nunmehr noch konsequenter Wasserspareinrichtungen eingesetzt werden, ohne dass negative Auswirkungen im Kanalsystem auftreten.

Nach der Erfindung ist ferner vorgesehen, dass der Sammeltank mit einem ersten Überlauf versehen ist, der vorzugsweise in den Auslass stromabwärts des Auslassventils mündet. Dabei sollte der Überlauf eine Einlassöffnung in der unteren Hälfte, vorzugsweise im unteren Drittel oder besser noch im unteren Viertel der Höhe des Sammeltanks aufweisen, damit im Falle eines Überlaufs nur das aufgrund der Temperaturschichtung kälteste Schmutzwasser abfließt.

Die Erfindung sieht des Weiteren vor, dass der Sammeltank in einen Vorsammeltank, in dem der Schmutzwassereinlass mündet, und einen Hauptsammeltank aufgeteilt ist, in dem der Schwimmer angeordnet ist, und dass Vor- und Hauptsammeltank über einen Durchlass vorzugsweise in der oberen Hälfte des Vorsammeltanks verbunden sind, wobei in dem Durchlass ein Filter vorgesehen ist, der vorzugsweise die im Schmutzwasser enthaltenen Feststoffe zurückhält, so dass sie sich in dem Vorsammeltank konzentrieren. In dem Hauptsammeltank und auch in dem Wärmetauschertank ist folglich weitgehend feststofffreies Schmutzwasser vorhanden, so dass es insbesondere im Bereich des Wärmetauschers nicht zum Festsetzen von Verschmutzungen kommt.

Nach der Erfindung ist ferner vorgeschlagen, dass der erste Überlauf in dem Hauptsammeltank angeordnet ist. Dies schließt nicht aus, dass auch in dem Vorsammeltank ein zweiter Überlauf angeordnet ist, der in den ersten Überlauf oder in den Auslass stromabwärts des Auslassventils mündet.

Zur Reinigung des Filters zwischen Vor- und Hauptsammeltank sollte eine Hochdruckstrahleinrichtung vorgesehen sein, die den Filter vom Hauptsammeltank her zusätzlich zu reinigen in der Lage ist.

Die Wärmerückgewinnungseinrichtung ist zweckmäßigerweise als konventionelle Wärmepumpe ausgebildet. Dies schließt nicht aus, dass andere Wärmerückgewinnungseinrichtungen in Frage kommen, die in der Lage sind, aus dem Wärmeinhalt eines Flüssigkeitsvolumens Wärme zu entziehen.

Nach der Erfindung ist ferner vorgesehen, dass in Strömungsrichtung vor dem Schmutzwassereinlass ein Abzweig vorgesehen ist, in dem sich eine Bypass-Leitung zur Umgehung des Sammeltanks anschließt - dies kann die normale Abwasserfallleitung sein - und die eine Ableitung des Schmutzwassers über die Bypass-Leitung erlaubt, wenn der Schmutzwassereinlass gesperrt oder verstopft ist. Ein solcher Abzweig ist für Notfälle vorgesehen, sollte es im Bereich des Schmutzwassereinlasses zu Blockierungen kommen. Das Schmutzwasser wird über die Bypass-Leitung an dem Sammeltank vorbeigeführt und mündet dann in die sich an die Wärmerückgewinnungsvorrichtung anschließenden Leitungen bzw. Kanäle.

Gegenstand der Erfindung ist ferner die Verwendung der oben beschriebenen Wärmerückgewinnungsvorrichtung für die Wärmerückgewinnung aus Grau- und Schwarzwasser, da dieses Wasser wegen der Verwendung vom Warmwasser im häuslichen Bereich einen besonders hohen Wärmeinhalt hat mit der Folge, dass sich die Wärmerückgewinnung lohnt.

In der Zeichnung ist Erfindung anhand eines Ausführungsbeispiels näher veranschaulicht. Es zeigen:
- Figur 1: einen Vertikalschnitt durch die erfindungsgemäße Wärmerückgewinnungsvorrichtung, und
- Figur 2: einen Vertikalschnitt durch einen zu der Wärmerückgewinnungsvorrichtung gehörenden Abzweig.

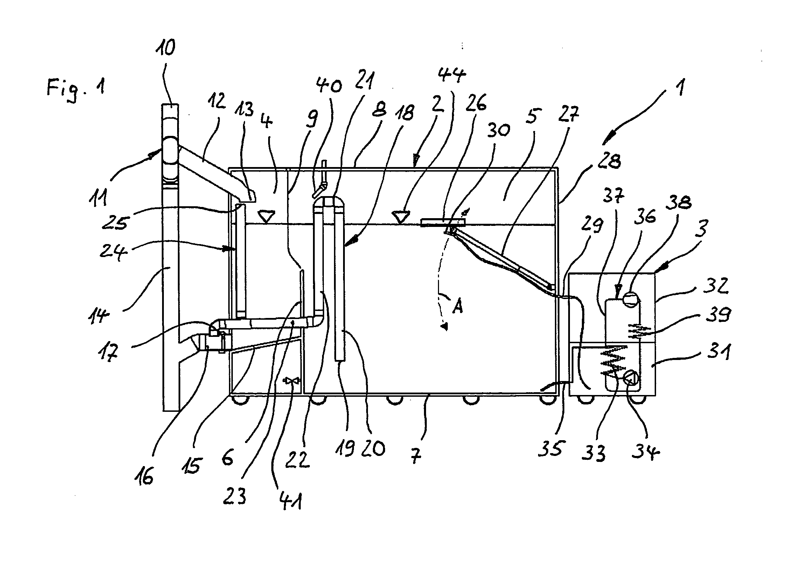

Figur 1 zeigt eine Wärmerückgewinnungsvorrichtung 1, die einen kubusförmigen Sammeltank 2 und eine daneben angeordnete Wärmerückgewinnungseinrichtung 3 aufweist.

Der Sammeltank 2 ist aufgeteilt in einen kleineren Vorsammeltank 4 und in einen größeren Hauptsammeltank 5. Beide sind durch eine vertikale Zwischenwand 6 getrennt, die sich vom Boden 7 des Sammeltanks 2 senkrecht nach oben bis über die Hälfte der Höhe des Sammeltanks 2 erstreckt. Zwischen der Oberkante der Zwischenwand 6 und der Deckenwandung 8 des Sammeltanks 2 ist ein Filter 9 aufgespannt, der dazu bestimmt ist, Feststoffe zurückzuhalten.

Ein hier nur teilweise dargestelltes Abwasserrohr 10 hat Verbindung zu einem häuslichen Abwassersystem und endet in einem Abzweig 11. Von diesem Abzweig 11 geht ein Zulaufrohr 12 aus, das in den Vorsammeltank 4 hineinragt und in einem Schmutzwassereinlass 13 endet, der im oberen Viertel des Vorsammeltanks 4 angeordnet ist. Von dem Abzweig 11 geht ferner eine Bypass-Leitung 14 ab, die senkrecht nach unten gerichtet ist und - was hier nicht näher dargestellt ist - in ein kommunales Kanalsystem mündet. Im Bereich des Bodens 15 des Vorsammeltanks 4 ist ein Auslass 16 vorgesehen, der in die Bypass-Leitung 14 mündet und in dem ein von außen steuerbares Auslassventil 17 angeordnet ist.

In dem Hauptsammeltank 5 befindet sich ein erster Überlauf 18, der eine im unteren Bereich des Hauptsammeltanks 5 angeordnete Einlassöffnung 19 aufweist. Von dort erstreckt sich ein erster vertikaler Rohrabschnitt 20 bis in den oberen Bereich des Hauptsammeltanks 5. Es schließt sich an ein U-Rohrstück 21, von dem aus ein senkrecht nach unten verlaufender zweiter Rohrabschnitt 22 ausgeht. Dieser winkelt ab in einen dritten, waagerecht verlaufenden Rohrabschnitt 23, der den Vorsammeltank 4 durchsetzt und in den Auslass 16 stromabwärts des Auslassventils 17 mündet. In dem Vorsammeltank 4 ist ein zweiter Überlauf 24 angeordnet, der als gerades, vertikal erstreckendes Überlaufrohr mit im oberen Bereich angeordneter Einlassöffnung 25 ausgebildet ist und untenseitig in den waagerechten dritten Rohrabschnitt 23 des ersten Überlaufs 18 mündet.

In dem Hauptsammeltank 5 ist ein Schwimmer 26 vorgesehen, der am freien Ende eines Lenkerarms 27 um eine zur Zeichnungsebene vertikalen Achse schwenkbar angelekt ist. Der Lenkerarm 27 ist an der Seitenwandung 28 des Hauptsammeltanks 5 angelenkt. Aufgrund dieser Aufhängung kann sich der Schwimmer 26 um den Anlenkpunkt an der Seitenwandung 28 bewegen, was durch den Pfeil A angedeutet ist.

An dem Lenkerarm 27 ist ein Zuführschlauch 29 befestigt, dessen Einlass 30 sich nahe dem Schwimmer 26 und unterhalb von ihm befindet. Der Zuführschlauch 29 durchsetzt die Seitenwandung 28 und erstreckt sich bis in die Wärmerückgewinnungseinrichtung 3 hinein.

Die Wärmerückgewinnungseinrichtung 3 ist vertikal aufgeteilt in einen Wärmetauschertank 31 und in ein darüber liegendes Gehäuseteil 32. Der Wärmetauschertank 31 ist hermetisch luftdicht abgeschlossen, und in ihn ragt das untere Ende des Zuführschlauchs 29 hinein. In dem Wärmetauschertank 31 befindet sich ein Doppelrohrwärmetauscher 33. Er ist als Rohrwicklung ausgebildet, die von einem innenseitig glatt ausgebildeten Innenrohr und einem das Innenrohr koaxial im Abstand umgebenden Mantelrohr gebildet wird. Dem Innenrohr zugeordnet ist eine Unterwasserpumpe 34, die das in dem Wärmetauschertank 31 befindliche Schmutzwasser in das glatt ausgebildete Innenrohr pumpt. Am Ende des Doppelrohrwärmetauschers 33 setzt sich das Innenrohr in einem Rückführrohr 35 fort, das den Wärmetauschertank 31 verlässt und die Seitenwandung 28 des Hauptsammeltanks 5 im Bereich des Bodens 7 durchsetzt und dort in den Hauptsammeltank 5 mündet.

Der von Innenrohr und Außenrohr des Doppelrohrwärmetauschers 33 gebildete Mantelkanal ist Teil eines Kreislaufs einer Wärmepumpe 36, der mit einem Wärmeträgermedium gefüllt ist. Der Mantelkanal setzt sich nach oben hin fort in einer Zuleitung 37, die zu einem Kompressor 38 in dem Gehäuseteil 32 führt. Der druckseitige Ausgang geht zu einem Kondensator 39 mit anschließender, hier nicht näher dargestellter Drossel und führt dann wieder nach unten in den Wärmetauschertank 31 und zum Eingang des Doppelrohrwärmetauschers 33, der als Verdampfer des Wärmeträgermediums wirkt.

An der Deckenwandung 8 des Sammeltanks 2 ist im Bereich des Hauptsammeltanks 5 eine Reinigungsdüse 40 angeordnet, deren Auslass auf die dem Hauptsammeltank 5 zugewandte Seite des Filters 9 gerichtet ist. Es können auch mehrere solcher Reinigungsdüsen in Richtung senkrecht zur Zeichnungsebene nebeneinander angeordnet sein. Durch Anschluss an ein entsprechendes Gerät können die Reinigungsdüsen 40 mit Hochdruckwasser beaufschlagt werden. Sofern der Filter 9 ein Oberflächenfilter ist, wird hierdurch der Filterkuchen, der sich auf der dem Vorsammeltank 4 zugewandten Seite gebildet hat, entfernt. Durch periodisches Reinigen kann ein Verstopfen des Filters über lange Zeit vermieden werden. Sollte die Reinigung mittels der Reinigungsdüsen 40 nicht mehr ausreichen, kann der Filter 9 nach oben herausgenommen werden und entweder außerhalb der Wärmerückgewinnungseinrichtung 1 gründlich gereinigt oder durch einen neuen ersetzt werden. In diesem Fall müsste das Schmutzwasser beidseits des Filters 9 abgelassen werden. Dies geschieht bezüglich des Vorsammeltanks 4 durch Öffnen des Auslassventils 17 und bezüglich des Hauptsammeltanks 5 durch Öffnen eines zusätzlichen Ventils 41.

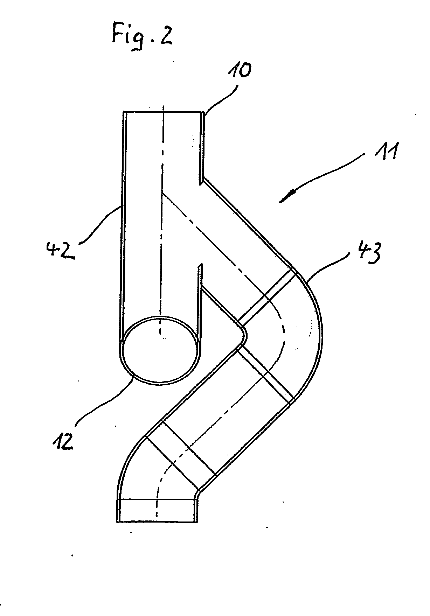

Figur 2 zeigt den Abzweig 11 in einer vergrößerten Darstellung. Das Abwasserrohr 10 mündet von oben in den Abzweig 11. Dieser setzt sich in einem geraden, nach unten gerichteten Abschnitt 42 fort, an den sich das Zulaufrohr 12 (Figur 1) anschließt. Ein Abzweigrohr 43 geht seitlich schräg ab und hat dann einen S-förmigen Verlauf, bis es wieder gerade nach unten gerichtet ist. Daran schließt sich die Bypass-Leitung 14 (Figur 1) an.

Die Wärmerückgewinnungsvorrichtung 1 arbeitet wie folgt. Das häusliche Schmutzwasser gelangt über das Abwasserrohr 10 in den Abzweig 11 und von dort in das Zulaufrohr 12, weil es sich gerade an den Abzweig 11 anschließt. Nur wenn das Zulaufrohr 12 verstopft ist, ist das Schmutzwasser gezwungen, in das Abzweigrohr 43 zu strömen und gelangt damit in die Bypass-Leitung 14. Es fließt dann ohne Wärmerückgewinnung an der Wärmerückgewinnungsvorrichtung 1 vorbei direkt in das kommunale Kanalsystem.

Über das Zulaufrohr 12 gelangt das Schmutzwasser normalerweise in den Vorsammeltank 4. Dabei ist das Auslassventil 17 geschlossen. In dem Vorsammeltank 4 können sich Feststoffe, beispielsweise Fäkalien, absetzen. Sobald das Niveau des Schmutzwasserspiegels in dem Vorsammeltank 4 die Oberkante der Zwischenwand 6 übersteigt, kann Schmutzwasser durch den Filter 9 in den Hauptsammeltank 5 überströmen. Da das Schmutzwasser über das Zulaufrohr 12 von oben in den Vorsammeltank 4 einfließt, gelangt nur warmes Schmutzwasser in den Hauptsammeltank 5. Das Filter 9 sorgt dafür, dass Feststoffe weitestgehend zurückgehalten werden, so dass sich im Hauptsammeltank 5 feststofffreies Schmutzwasser ansammeln kann.

Im dargestellten Ausführungsbeispiel ist ein Schmutzwasserspiegel 44 eingezeichnet, auf dem der Schwimmer 26 schwimmt. Auf natürliche Weise und wegen des Zuflusses von nur warmem Schmutzwasser im oberen Bereich hat sich innerhalb des Hauptsammeltanks 5 ein Temperaturgradient mit nach oben hin ansteigender Temperatur ausgebildet, so dass sich im Bereich des Bodens 15 Schmutzwasser mit der niedrigsten Temperatur und im Bereich des Schmutzwasserspiegels 44 Schmutzwasser mit der höchsten Temperatur befindet. Da sich der Einlass 30 des Zuführschlauchs 29 nur geringfügig unterhalb des Schmutzwasserspiegels 44 befindet, fließt in den Zuführschlauch 29 Schmutzwasser mit der höchsten Temperatur ein, und zwar unabhängig von der Höhe des Schmutzwasserspiegels 44. Das Schmutzwasser gelangt in den Wärmetauschertank 31 und füllt diesen vollständig aus. Die Unterwasserpumpe 34 treibt das Schmutzwasser in den Doppelrohrwärmetauscher 33, wo es das Innenrohr durchsetzt und dann wieder über das Rückführrohr 35 in den Hauptsammeltank 5 gelangt. In dem Doppelrohrwärmetauscher 33 wird das entspannte und deshalb abgekühlte Wärmeträgermedium so weit aufgewärmt, dass es verdampft. Dabei findet über das Innenrohr einerseits und die Außenwandung des Außenrohrs andererseits ein intensiver Wärmetausch zwischen Schmutzwasser und Wärmeträgermedium statt. Das so erwärmte Wärmeträgermedium wird mittels des Kompressors 38 verdichtet und gibt die Wärme in dem Kondensator 39 an ein weiteres Wärmeträgermedium ab, das dann die Wärme dahin transportiert, wo sie benötigt wird.

Wenn der Schmutzwasserspiegel 44 das Niveau des U-Rohrstücks 21 übersteigt, erfolgt der Abfluss aus dem Hauptsammeltank 5 über den ersten Überlauf 18. Aufgrund der sehr weit unten liegenden Einlassöffnung 19 fließt dann nur kaltes Schmutzwasser ab. Es gelangt über den Auslass 16 in die Bypass-Leitung 14. Entsprechendes geschieht mit dem zweiten Überlauf 24, wenn der Schmutzwasserspiegel 44 in dem Vorsammeltank 4 über die Einlassöffnung 25 zu liegen kommt.

In regelmäßigen zeitlichen Abständen oder bei Übersteigen eines bestimmten Schmutzwasserniveaus wird das Auslassventil 17 für eine gewisse Zeit geöffnet, so dass sich eine erhebliche Menge an Schmutzwasser in das kommunale Kanalsystem schwallartig ergießt und für einen intensiven Spüleffekt sorgt. Die erfindungsgemäße Wärmerückgewinnungsvorrichtung 1 dient also auch als Zwischenspeicher für das häusliche Abwasser und ist deshalb in der Lage, einen reinigenden Spüleffekt zu erzielen, der ohne einen solchen Zwischenspeicher nicht entstehen würde.

## Patentansprüche

1. Wärmerückgewinnungsvorrichtung (1) zur Wärmerückgewinnung aus Schmutzwasser, insbesondere aus Grau- und Schwarzwasser, mit einem Sammeltank (2), der einen Schmutzwassereinlass (13) hat, und mit einem Wärmetauschertank (31), in dem ein Wärmetauscher (33) als Teil einer Wärmerückgewinnungseinrichtung (36) angeordnet ist und der mit dem Sammeltank (2) über eine Zuführleitung (29) derart verbunden ist, dass das Schmutzwasser vom Sammeltank (2) in den Wärmetauschertank (31) einführbar ist, **dadurch gekennzeichnet, dass** das einlassseitige Ende (30) der Zuführleitung (29) im Bereich eines Schwimmers (26) angeordnet ist, der in dem Sammeltank (2) mit dem einlassseitigen Ende (30) der Zuführleitung (29) auf- und abbewegbar ist.

2. Wärmerückgewinnungsvorrichtung (1) nach Anspruch 1, **dadurch gekennzeichnet, dass** der Schmutzwassereinlass (13) im oberen Viertel des Sammeltanks (2) oder obenseitig angeordnet ist und/oder dass der Schwimmer (26) vorzugsweise an einem Auslegerarm (27) geführt ist und/oder dass die Zuführleitung (29) als biegsamer Schlauch ausgebildet ist.

3. Wärmerückgewinnungsvorrichtung nach Anspruch 1 oder 2, **dadurch gekennzeichnet, dass** der Wärmetauscher als Doppelrohrwärmetauscher (33) mit zumindest einem Innenrohr und einem dieses umgebenden Mantelrohr ausgebildet ist und dass eine Zuführpumpe (34) vorgesehen ist, über die das in dem Wärmetauschertank (31) befindliche Schmutzwasser in das Innenrohr einpumpbar ist, insbesondere dass das Innenrohr glatt ausgebildet ist.

4. Wärmerückgewinnungsvorrichtung (1) nach einem der Ansprüche 1 bis 3, **dadurch gekennzeichnet, dass** der Wärmetauschertank (31) und der Sammeltank (2) über eine Rückführleitung (35) verbunden sind, vorzugsweise die Rückführleitung (35) mit einem Auslass in der unteren Hälfte der Wärmetauscherkammer (31) und mit einem Einlass in der unteren Hälfte des Sammeltanks (2) verbunden ist, insbesondere Ein- und Auslass im unteren Drittel von Wärmetauschertank (31) bzw. Sammeltank (2) angeordnet sind.

5. Wärmerückgewinnungsvorrichtung (1) nach einem der Ansprüche 1 bis 4, **dadurch gekennzeichnet, dass** der Wärmetauschertank (31) luftdicht abgeschlossen ist.

6. Wärmerückgewinnungsvorrichtung (1) nach einem der Ansprüche 1 bis 5, **dadurch gekennzeichnet, dass** der Sammeltank (2) mit einem Auslass (16) versehen ist, der ein schließ- und öffenbares Auslassventil (17) aufweist, über den der Sammeltank (2) zumindest teilweise entleerbar ist.

7. Wärmerückgewinnungsvorrichtung (1) nach einem der Ansprüche 1 bis 6, **dadurch gekennzeichnet, dass** der Sammeltank (2) mit einem ersten Überlauf (18) versehen ist.

8. Wärmerückgewinnungsvorrichtung (1) nach Anspruch 6 und 7, **dadurch gekennzeichnet, dass** der Überlauf (18) in den Auslass (16) stromabwärts des Auslassventils (17) mündet.

9. Wärmerückgewinnungsvorrichtung (1) nach Anspruch 7 oder 8, **dadurch gekennzeichnet, dass** der Überlauf (18) eine Einlassöffnung (19) in der unteren Hälfte, vorzugsweise im unteren Drittel oder besser im unteren Viertel der Höhe des Sammeltanks (2) aufweist.

10. Wärmerückgewinnungsvorrichtung (1) nach einem der Ansprüche 1 bis 9, **dadurch gekennzeichnet, dass** der Sammeltank (2) in einen Vorsammeltank (4), in den der Schmutzwassereinlass (13) mündet, und einen Hauptsammeltank (5) aufgeteilt ist, in dem der Schwimmer (26) angeordnet ist, und dass Vor- und Hauptsammeltank (4, 5) über einen Durchlass vorzugsweise in der oberen Hälfte des Vorsammeltanks (4) verbunden sind, wobei in dem Durchlass ein Filter (9) vorgesehen ist.

11. Wärmerückgewinnungsvorrichtung (1) nach einem der Ansprüche 7 bis 9 und Anspruch 10, **dadurch gekennzeichnet, dass** der erste Überlauf (18) in dem Hauptsammeltank (5) angeordnet ist.

12. Wärmerückgewinnungsvorrichtung (1) nach Anspruch 10 oder 11, **dadurch gekennzeichnet, dass** in dem Vorsammeltank (4) ein zweiter Überlauf (24) angeordnet ist, der in den ersten Überlauf (18) oder in den Auslass (16) stromabwärts des Auslassventils (17) mündet und/oder dass der Filter (9) vom Hauptsammeltank (5) her mittels einer Hochdruckstrahleinrichtung (40) reinigbar ist.

13. Wärmerückgewinnungsvorrichtung (1) nach einem der Ansprüche 1 bis 12, **dadurch gekennzeichnet, dass** die Wärmerückgewinnungseinrichtung als Wärmepumpe (36) ausgebildet ist.

14. Wärmerückgewinnungsvorrichtung (1) nach einem der Ansprüche 1 bis 13, **dadurch gekennzeichnet, dass** in Strömungsrichtung vor dem Schmutzwassereinlass (13) ein Abzweig (11) vorgesehen ist, an den sich eine Bypass-Leitung (14) zur Umgehung des Sammeltanks (2) anschließt und die eine Ableitung des Schmutzwassers über die Bypass-Leitung (14) erlaubt, wenn der Schmutzwassereinlass (13) gesperrt oder verstopft ist.

15. Verwendung der Wärmerückgewinnungsvorrichtung (1) nach einem der Ansprüche 1 bis 14 zur Wärmerückgewinnung aus Grau- und Schwarzwasser.
